# FASCICULE DE BREVET EUROPEEN

(11) **EP 0 976 102 B1**
(45) Date de publication et mention de la délivrance du brevet: **02.05.2003**
(21) Numéro de dépôt: 96944104.7
(22) Date de dépôt: 30.12.1996
(51) Int. Cl.: G06K 19/02, G06K 19/18

(54) **PROCEDE DE FABRICATION D'UNE COUCHE DE REVETEMENT POUR SUPPORT PORTABLE, NOTAMMENT SUPPORT AU FORMAT CARTE**
VERFAHREN ZUR HERSTELLUNG EINER DECKSCHICHT FÜR TRAGBARE DATENTRÄGER, INSBESONDERE IM FORMAT EINER KARTE
PROCESS FOR FABRICATING A COATING LAYER ON A PORTABLE SUPPORT, PARTICULARLY A CARD FORMAT SUPPORT

(30) Priorité: 04.01.1996 FR 9600059
(43) Date de publication de la demande: 02.02.2000
(73) Titulaire: GEMPLUS, 13881 Gémenos Cédex (FR)
(72) Inventeur: CORNIGLION, Isabelle, F-13390 Auriol (FR); LERICHE, Christian, F-13530 Trets (FR)
(86) Numéro de dépôt international: FR9602105
(87) Numéro de publication internationale: WO97025689

(56) Documents cités:
- EP-A- 0 031 521
- EP-A- 0 636 495
- US-A- 4 906 498
- PATENT ABSTRACTS OF JAPAN vol. 6, no. 175 (P-141) [1053] , 9 Septembre 1982 & JP 57 090789 A (KONISHIROKU SHSHIN KOGYO), 5 Juin 1982,

## Description

L'invention concerne un procédé de fabrication d'une couche de revêtement pour support portable ainsi qu'un support muni d'une telle couche.

Les supports portables visés dans la présente invention sont des objets aux dimensions normalisées, qui peuvent être transportés sans peine par leur propriétaire, par exemple dans une poche. Il s'agit notamment de supports au format carte tels que des cartes à puce ou des badges qui, dans leur utilisation la plus courante, identifient leur titulaire et lui confèrent des droits tels que des droits d'accès ou des droits de réaliser diverses opérations bancaires.

Aujourd'hui, ces supports portables au format carte sont normalisés. La norme usuelle ISO 7810 définit des cartes standards de 85 mm de longueur, 54 mm de largeur, et de 0,76 mm d'épaisseur.

Pour la fabrication d'une carte selon l'art antérieur, on fabrique tout d'abord un corps de carte que l'on imprime et que l'on recouvre d'une couche de revêtement de polyméthylméthacrylate (PMMA) transparente et de faible épaisseur, transférée à partir d'un film de transfert.

En pratique, les films de transfert sont des films multicouches formés par enduction ou lamination. Ils se composent d'une couche support de polyéthylène téréphtalate (PET) vernie en surface et séparée de la couche de revêtement par une couche de détachement ou de libération constituée d'un adhésif, par exemple le polyvinylbutyrate (PVB) ou de produits du même type. Une autre couche ou couche d'adhésion peut être ajoutée à la couche de revêtement pour favoriser l'adhésion de ladite couche de revêtement sur le support. Dans un exemple, cette couche d'adhésion est du type copolymère polychlorure de vinyle (PVC) - polychlorure de vinyle acétate (PVAC).

Lorsqu'on applique un film tel que décrit ci-dessus à la surface du corps de carte et qu'on le soumet à une source de chaleur provenant par exemple d'une tête électronique chauffante, la couche de détachement se détache et l'ensemble des couches de revêtement et d'adhésion adhère à la surface de la carte, naturellement, sous l'effet de la chaleur.

Toutefois, après le transfert, il n'est pas possible de modifier les caractéristiques de la couche de revêtement.

Par ailleurs, la couche de revêtement étant thermoplastique, elle n'est donc pas ou peu réticulée, ramollit à la chaleur, et manque de résistance vis-à-vis de l'abrasion et de certains solvants.

On connaît par ailleurs, par le document EP-626.495, un procédé d'impression par sublimation (aussi appelé D2T2 pour « Dye Diffusion Thermal Transfer »), c'est-à-dire par transfert tout ou rien. II propose de recouvrir une couche imprimée d'une couche thermoplastique, elle-même recouverte d'un vernis qui est thermodurci aux UV. Le vernis ne peut être appliqué directement sur l'impression car sinon on observe des bavures de l'impression. La couche de protection décrite dans ce document est donc composée de deux couches successives.

La présente invention a pour but de proposer un nouveau procédé de fabrication d'une couche de revêtement pour support portable ainsi qu'un support portable muni d'une telle couche, qui pallient à moindre coût les inconvénients précités, et qui permettent, en particulier, l'obtention de supports dont la couche de revêtement adhère convenablement et présente une résistance accrue à la chaleur, à l'abrasion et aux solvants.

Ce but, ainsi que d'autres qui apparaitront par la suite, est atteint grâce à un procédé conforme à la revendication 1.

La description qui va suivre, et qui ne comporte aucun caractère limitatif, permettra de mieux comprendre la manière dont l'invention peut être mise en pratique.

Elle doit être lue au regard des dessins annexés, dans lesquels :

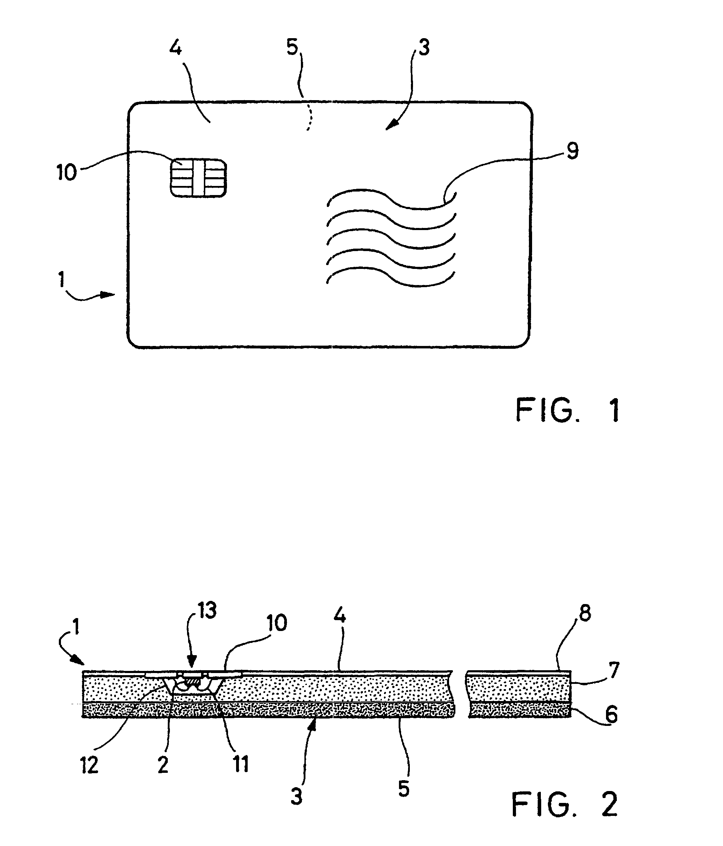

- la figure 1 représente, en vue de dessus, un support portable au format carte selon l'invention ;
- la figure 2 représente, en coupe transversale, un support au format carte selon l'invention ;
- la figure 3 illustre, en coupe transversale, un transfert d'une couche de protection à partir d'un film de transfert selon une première variante d'exécution d'un premier mode de réalisation de l'invention ; et
- la figure 4 illustre, en coupe transversale, un transfert d'une couche de protection à partir d'un film de transfert selon une seconde variante d'exécution de ce premier mode de réalisation de l'invention.

Dans l'exemple de la présente description, le support portable de l'invention est une carte 1 à microcircuit ou puce 2 comportant un corps de carte 3.

Le corps de carte 3 forme un parallélépipède rectangle dont les dimensions sont définies par la norme ISO 7810 précitée. Il présente donc six faces dont deux grandes faces d'environ 85 mm de longueur et 54 mm de largeur : une face de dessus 4 et une face de dessous 5.

Il se compose d'une ou plusieurs couches ou épaisseurs, par exemple trois, une couche inférieure 6, une couche intermédiaire 7 et une couche supérieure ou couche de revêtement 8.

Les couches 6, 7 sont des couches plastiques polymérisées réalisées par exemple, en acrylonitrile-butadiène-styrène (ABS), en polycarbonate (PC), en PET, en PVC, en copolymère PVC-PVAc ou dans un mélange de ces composés. Toutefois, tout autre matériau, notamment thermoplastique, conviendra à leur réalisation, s'il confère au corps de carte 3, des qualités requises de rigidité en flexion, de résistance aux chocs, de stabilité dimensionnelle, de couleur et d'imprimabilité.

La couche de revêtement 8 fait l'objet de l'invention. Elle recouvre la couche intermédiaire 7 du corps de carte 3, et son épaisseur est normalement comprise entre environ 2 et 200 µm. Toutefois, lorsque son épaisseur est comprise entre environ 2 et 20 µm, on la définira volontiers comme étant une couche de protection, alors que lorsque son épaisseur est comprise entre environ 20 et 200 µm, on la définira plutôt comme étant une couche de dessus du corps de carte 3 ou overlay. Bien entendu, les épaisseurs données ci-dessus ne sont pas limitatives et l'on peut imaginer une couche de revêtement 8 d'une épaisseur de l'ordre de l'épaisseur de la carte, c'est-à-dire de l'ordre de 800 µm.

Le corps de carte 3 est imprimé. De ce fait, il montre une impression 9 visible à la face 4 de la carte 1. Des colorants qui composent l'impression 9, sont contenus, soit dans la couche de revêtement 8, soit dans la couche intermédiaire 7, la couche de revêtement 8 étant alors transparente.

La carte 1 de l'invention présente des métallisations 10 affleurantes à la face 4 du corps de carte 3. Ces métallisations 10 sont électriquement reliées, par des fils de connexion 11, à la puce 2 du corps de carte 3. L'ensemble puce 2 et fils de connexion 11 est enrobé dans une résine 12 et forme, avec les métallisations 10, un module électronique 13.

Pour la fabrication d'un support portable au format carte du type ci-dessus, on assemble tout d'abord les couches 6 et 7 du corps de carte 3 et le module électronique 13, en vue d'obtenir un ensemble formé desdites couches 6, 7 et dudit module électronique 13.

La réalisation de cet ensemble peut être effectuée selon différentes manières connues de l'homme du métier, par exemple, par colamination ou par moulage ou surmoulage.

Dans le cas d'une colamination, on dispose les couches 6 et 7 entre deux plateaux d'une presse. On effectue alors leur soudage en appliquant des contraintes de température et de pression, et le module électronique 13 est déposé dans une cavité, après usinage de ladite cavité dans lesdites couches 6, 7 soudées.

Dans le cas d'un moulage ou d'un surmoulage, on injecte ou on dispense, dans une cavité d'un moule aux dimensions de l'ensemble que l'on veut obtenir, une matière plastique fluide. Toutefois, dans le moulage, on ménage une cavité dans les couches 6, 7 moulées dans laquelle on reporte le module électronique 13, alors que dans le surmoulage, le module électronique 13 est présent dans la cavité du moule lors de l'injection ou de la dispense de la matière plastique fluide.

Dès que l'assemblage des couches 6, 7 et du module électronique 13 a été réalisé, on peut imprimer la surface de ladite couche 7 et, conformément à une autre étape selon l'invention, recouvrir cette surface 7 de la couche de revêtement 8.

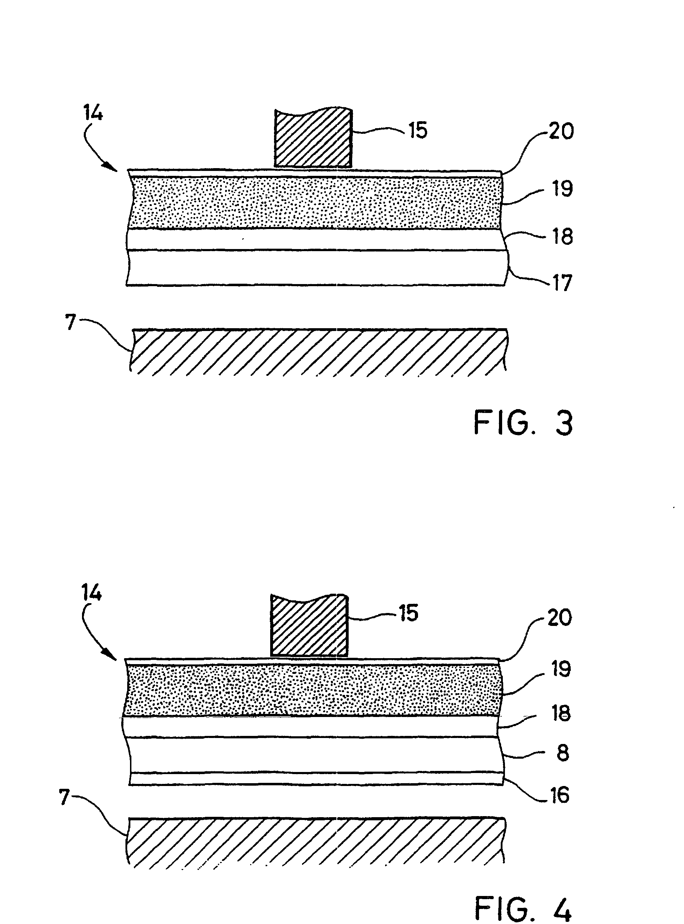

A cet effet, dans un premier mode de réalisation selon l'invention représenté aux figures 3 et 4, on applique un film de transfert 14 à la surface du corps de carte 3 et on le soumet à une source de chaleur provenant, par exemple, d'une tête électronique 15.

Le film de transfert 14 se compose de différentes couches superposées : une couche inférieure dite d'adhésion 16, sur laquelle repose une couche dite de revêtement 8 ou 17, une couche dite de détachement 18, une couche dite de support 19 et une couche supérieure dite de glissement 20 destinée à entrer en contact avec la tête électronique 15.

Dans un exemple, la couche d'adhésion 16 est une couche de PVC-PVAc, la couche de détachement 18 est une couche de PVB, la couche de support 19 est une couche de PET et la couche de glissement 20 est une couche d'un polyuréthane alkyle.

Pour la réalisation de la couche de revêtement 8, 17 du film de transfert 14, on prépare une première solution I en phase liquide. Cette solution I est un mélange de monomères et/ou d'oligomères comportant des fonctions alcool, d'un ou plusieurs catalyseurs ou initiateurs de polymérisation desdits monomères ou oligomères, et d'un solvant. Ce mélange comprend en outre, le cas échéant, des composés difonctionnels comportant, dans un exemple, deux fonctions alcène à leurs extrémités.

Les monomères et/ou oligomères de la solution I sont susceptibles de polymériser en deux étapes consécutives et indépendantes, donc contrôlables, une première étape dite de polymérisation et une seconde étape dite de post-réticulation, lesdites étapes faisant intervenir des réactions chimiques différentes déclenchées par des catalyseurs ou initiateurs différents.

Selon l'invention, on déclenche ou on amorce la polymérisation des monomères ou oligomères et, éventuellement, des composés difonctionnels de la solution I. Cette polymérisation fait intervenir un premier mécanisme réactionnel radicalaire dans lequel les monomères ou oligomères polymérisent en vue de former des polymères thermoplastiques éventuellement faiblement réticulés par les composés difonctionnels et comportant des fonctions alcool. On obtient alors une seconde solution II.

On introduit ensuite, dans cette solution II, des monomères ou oligomères comportant des fonctions époxy, et un catalyseur cationique de l'addition desdits monomères ou oligomères sur les fonctions alcool des polymères de la solution II. On obtient alors une troisième solution III.

Cette solution III est déposée sur la couche support 19 préalablement enduite de l'adhésif formant la couche de détachement 18 et couverte, le cas échéant, de la couche de glissement 20.

La phase solvant de la solution III déposée est alors évaporée, et l'on obtient ainsi le film 14 de la figure 3 comportant la couche de revêtement 17 dite couche transitoire thermoplastique de revêtement, sèche au toucher, et qui n'est pas ou peu réticulée. Ce film 14 peut être enroulé et stocké.

Le degré de réticulation de la couche transitoire 17 peut être déterminé à l'avance en réglant, dans la solution III, la quantité des composés difonctionnels. D'autre part, en réglant l'éloignement des deux fonctions alcène des composés difonctionnels, on obtient un polymère thermoplastique peu réticulé dont la maille est plus ou moins lâche.

Dans une première variante d'exécution du premier mode de réalisation selon l'invention, la couche transitoire 17 est transférée telle quelle sur la couche 7 du corps de carte 3, à partir du film de transfert 14 de la figure 3.

L'aptitude d'une couche polymérisée à être imprimée est inversement proportionnelle à son degré de réticulation. En effet, plus une couche polymérisée est réticulée, et moins cette couche est imprimable. Aussi, une couche thermoplastique, donc peu polymérisée, est imprimable et, de ce fait, on peut imprimer la couche transitoire de revêtement 17 après son transfert sur la couche 7 du corps de carte 3. A cet effet, il est notamment possible de faire diffuser, dans ou au travers de la couche transitoire 17, sous l'effet de la chaleur, des colorants à partir d'un film coloré non représenté sur les figures, que l'on place sur ladite couche transitoire 17 transférée.

Puis, après une éventuelle impression, la couche transitoire 17 est post-réticulée de manière la rendre thermodurcissable. Une seconde réaction est alors déclenchée par la libération, dans la couche transitoire 17, de protons H⁺ provenant d'un catalyseur cationique. Il s'agit de l'addition des composés comportant deux fonctions époxy sur les fonctions alcool des polymères.

En définitive, selon l'invention, on fabrique des réseaux interpénétrés ou semi-interpénétrés qui combinent deux types de réactions successives procédant de mécanismes différents, notamment polymérisation ou réticulation radicalaire mettant en jeu des peroxydes ou des UV, et polycondensation ou polymérisation cationique, la première réaction faisant intervenir des doubles liaisons, la seconde, dont le déclenchement est contrôlé, faisant intervenir des groupes époxy ou isocyanates sur des alcools ou des amines.

La couche thermodurcissable 8 obtenue comportant de ce fait des polymères ou copolymères de monomères réticulés par une liaison provenant de l'addition d'une fonction alcool sur un groupe époxy, elle est, contrairement à la couche transitoire 17, insensible à la température, à l'abrasion et aux solvants. Aussi, des fraudeurs, qui voudraient dénaturer la couche de revêtement 8, seraient confrontés à d'énormes difficultés. De plus, les composés colorés de l'impression 9, contenus dans la couche de revêtement 8 ou alors dans la couche 7, ne diffusent pas spontanément dans ou au travers de ladite couche 8, comme cela est le cas pour les cartes de l'état de la technique. De ce fait, même transportées dans une pochette de plastique d'un portefeuille, les cartes objets de la présente invention ne déteignent pas. La post-réticulation permet donc de protéger l'impression.

Dans une seconde variante d'exécution du premier mode de réalisation de l'invention illustrée à la figure 4, la couche transitoire 17 est post-réticulée sur son support de film 14. On ajoute alors avantageusement, à ladite couche 8 post-réticulée et thermodurcissable, la couche d'adhésion 16 avant son transfert sur la couche 7 du corps de carte 3.

Par ailleurs, dans un second mode de réalisation de l'invention, on n'effectue pas de transfert de la couche de revêtement 8 ou 17 à partir d'un film de transfert, mais on enduit directement la couche 7 du corps de carte 3 de la solution III. Après évaporation de la phase solvant, on obtient alors la couche transitoire de revêtement 17 de l'invention que l'on imprime éventuellement avant de déclencher la post-polymérisation. Le dépôt en phase liquide de la solution III favorise le mouillage de la couche 7 et, par conséquent, l'adhérence de la couche transitoire 17 sur ladite couche 7 est considérablement améliorée.

Enfin, dans un troisième mode de réalisation de l'invention, une solution IV est obtenue directement par mélange des monomères et/ou oligomères et autres composés de la solution I et des monomères et/ou oligomères et autres composés de la solution III. On déclenche alors sélectivement la polymérisation des monomères et/ou oligomères de la solution I en déclenchant uniquement la polymérisation radicalaire, on évapore le solvant, puis on réalise la post-polymérisation des polymères obtenus.

Dans un exemple de l'invention, la solution I est un mélange :
- de monomères ou d'oligomères méthacrylates comportant des fonctions alcools ;
- d'azo-bis-iso-butyro nitrile (AIBN) catalysant la polymérisation des monomères ou oligomères précités;
- de solvant méthyl-éthyl-cétone ; et
- de composés difonctionnels comportant deux doubles liaisons carbone-carbone en bout de chaîne ;

Une montée en température, de l'ordre de 80 °C, a pour effet d'activer l'AIBN qui se scinde et libère des radicaux libres amorçant la polymérisation des mono ou oligomères méthacrylates. On obtient finalement la solution II.

A cette solution II, on ajoute :
- des monomères ou oligomères comportant deux groupes époxy ;
- un catalyseur cationique ; et
- divers monomères ou oligomères tels que de l'éthyl triglycol méthacrylate (ETGMA), qui amène, en particulier, un effet flexibilisant par plastification interne, du glycidylméthylméthacrylate (GMMA), ou de l'hydroxyéthylméthacrylate (HEMA). On obtient alors une solution III qui, après évaporation de la phase solvant de méthyl-éthyl-cétone, et post-réticulation, permet d'obtenir la couche de revêtement réticulée 8 de l'invention.

Dans un autre exemple de réalisation, on a préparé deux formulations à partir d'une solution de polymères méthacrylates comportant 20 MMA pour 5 HEMA qu'on a mélangé avec un coréactif, soit le diglycidyléther de butanediol-1,4 (DGEBD) pour la formulation I, soit le 3,4 époxycyclohexylméthyl-3,4 époxycyclohexane (ECHME) pour la formulation II, et avec un catalyseur à 2%. Dans ces deux formulations, on a une fonction -OH provenant des polymères méthacrylates par fonction époxy provenant des coréactifs DGEBD ou ECHME.

Par ailleurs, on a enduit une couche support de PET d'une couche de libération constituée de deux sous-couches de 1 µm de PVB environ.

On a alors déposé, sur la couche de PVB, de 3 à 6 µm d'une des formulations I ou II.

Puis, on a évaporé le solvant des formulations I et II pendant 2 minutes à 40-50 °C dans une étuve. On a alors obtenu, pour chaque formulation, un film de transfert tel que décrit en figure 3, comportant une couche thermoplastique 17.

Des couches 17 ont été transférées sur une carte PVC comportant une impression photographique, à l'aide d'une tête électronique chauffante. Après avoir effectué une post-réticulation desdites couches transférées par exemple par des U.V. , on a obtenu deux cartes I et II.

Des tests comparatifs on été effectués sur les cartes I et II, ainsi que sur une carte III de l'état de la technique comportant une couche de revêtement thermoplastique à base de PMMA.

Ces tests ont montrés que :
- les colorants de l'impression photographique des cartes I ou II n'ont pas sensiblement migré sur une pochette plastique de portefeuille, contrairement à ceux de la carte III ;
- la résistance aux solvants des cartes I et II, aux solvants, et, en particulier, la résistance au xylène, est améliorée par rapport à celle de la carte III. En effet, les cartes munies de la couche de revêtement 8 de l'invention ne présentent pas de cloques apparentes. De plus, l'impression photographique n'a pas été dénaturée.

Dans un autre exemple de réalisation, on a préparé une solution de polymère méthacrylate comportant 20 MMA et 5 HEMA avec un copolymère vinylacétate, vinylalcool, vinylchloride du type VAGH distribué par la société Union Carbide. Après dépôt sur le corps de carte et réticulation, les tests ont montré que la carte obtenue a une résistance à l'abrasion deux fois supérieure à celle de la carte III.

L'invention ici décrite a donc permis de résoudre les problèmes posés par l'état de la technique. On notera cependant qu'elle n'est nullement limitée à une post-réticulation de polyméthacrylates comportant des fonctions hydroxyles par des composés difonctionnels comportant deux fonctions époxydes. Bien évidemment, tout procédé de fabrication faisant intervenir une couche thermoplastique susceptible d'être post-réticulée fait l'objet de l'invention.

## Revendications

1. Procédé de fabrication d'un support portable (1), notamment support au format carte, comportant un corps de support (3) muni, sur l'une de ses faces (4), d'une couche de revêtement (8), **caractérisé en ce que**, pour la fabrication de ladite couche de revêtement (8) :
- on applique une couche thermoplastique transitoire (17) sur ledit support portable (1);
- on réticule ladite couche thermoplastique transitoire (17) de manière à la rendre thermodurcissable.

2. Procédé selon la revendication 1, **caractérisé en ce que**, pour l'obtention de ladite couche thermoplastique transitoire (17) :
- on prépare une première solution (I) en phase liquide comportant un mélange de monomères et/ou d'oligomères et un catalyseur ou un initiateur de polymérisation desdits monomères et/ou oligomères ;
- on déclenche la polymérisation desdits monomères et/ou oligomères de ladite solution (I) en vue d'obtenir une seconde solution (II).

3. Procédé selon la revendication 2, **caractérisé en ce que** :
- on introduit, dans ladite seconde solution (II), des monomères et/ou oligomères et un catalyseur de l'addition desdits monomères et/ou oligomères sur les polymères de ladite seconde solution (II) en vue d'obtenir une troisième solution (III).

4. Procédé selon la revendication 3, **caractérisé en ce que** :
- on dépose ladite troisième solution (III) sur une couche (19) d'un film de transfert (14).

5. Procédé selon la revendication 3, **caractérisé en ce que** :
- on enduit une couche (7) dudit corps de support (3) de ladite troisième solution (III).

6. Procédé selon l'une des revendications 3, 4 ou 5, **caractérisé en ce que** :
- on évapore une phase solvant de ladite troisième solution (III).

7. Procédé selon l'une des revendications 1, 2 ou 3, **caractérisé en ce que** :
- on imprime ladite couche thermoplastique transitoire (17).

8. Procédé selon l'une des revendications 1 à 8, **caractérisé en ce que** :
- on transfère ladite couche thermoplastique transitoire (17) sur ledit corps de support (3) à partir d'un film de transfert (14).

9. Procédé selon l'une des revendications 1 à 7, **caractérisé en ce que** :
- on réticule ladite couche thermoplastique transitoire (17) préalablement à son transfert.

10. Procédé selon l'une des revendications 1 à 9, **caractérisé en ce que**, pour l'obtention de ladite couche de revêtement (8), on procède en deux étapes consécutives et indépendantes, une première étape dite de polymérisation faisant intervenir un mécanisme radicalaire, dans laquelle des monomères polymérisent en vue de former une couche thermoplastique transitoire (15), et une seconde étape dite de post-polymérisation, dans laquelle on réticule ladite couche thermoplastique transitoire de manière à former ladite couche de revêtement (8) thermodurcissable.

11. Procédé selon l'une des revendications 1 à 10, **caractérisé en ce que**, pour la fabrication de ladite couche de revêtement (8), on réticule des polymères méthacryliques par des composés comportant soit des groupes époxy, soit des fonctions alcool.

## Patentansprüche

1. Herstellungsverfahren eines tragbaren Trägers (1), insbesondere eines Trägers im Kartenformat, mit einem auf einer seiner Seiten (4) mit einer Beschichtungsschicht (8) versehenen Trägerkörper (3), **dadurch gekennzeichnet, dass** für die Herstellung der besagten Beschichtungsschicht (8):
- man eine thermoplastische Übergangsschicht (17) auf dem besagten tragbaren Träger (1) anwendet;
- man die besagte thermoplastische Übergangsschicht (17) derart vernetzt, dass sie wärmeaushärtend wird.

2. Verfahren gemäß Anspruch 1, **dadurch gekennzeichnet, dass** man zum Erhalt der besagten thermoplastischen Übergangsschicht (17):
- eine erste Lösung (I) in der eine Mischung aus Monomeren und / oder Oligomeren und einen Katalysator oder Polymerisationskatalysator der besagten Monomere und / oder Oligomere enthaltende flüssigen Phase zubereitet;
- die Polymerisation der besagten Monomere und / oder Oligomere der besagten Lösung (I) zwecks Erhalt einer zweiten Lösung (II) auslöst.

3. Verfahren gemäß Anspruch 2, **dadurch gekennzeichnet, dass**:
- man in die besagte zweite Lösung (II) Monomere und / oder Oligomere und einen Katalysator zum Zusatz der besagten Monomere und / oder Oligomere auf den Polymeren der besagten zweiten Lösung (II) zwecks Erhalt einer dritten Lösung (III) einführt.

4. Verfahren gemäß Anspruch 3, **dadurch gekennzeichnet, dass**:
- man die besagte dritte Lösung (III) auf einer Schicht (19) einer Überleitungsfolie (14) aufbringt.

5. Verfahren gemäß Anspruch 3, **dadurch gekennzeichnet, dass**
- man eine Schicht (7) des besagten Trägerkörpers (3) mit der besagten dritten Lösung (III) bestreicht.

6. Verfahren gemäß Anspruch 3, 4, oder 5, **dadurch gekennzeichnet, dass**:
man eine Lösungsphase der besagten dritten Lösung (III) verdampft.

7. Verfahren gemäß Anspruch 1, 2 oder 3, **dadurch gekennzeichnet, dass**:
- man die besagte thermoplastische Übergangsschicht (17) druckt.

8. Verfahren gemäß Anspruch 1 bis 8, **dadurch gekennzeichnet, dass**:
- man die besagte thermoplastische Übergangsschicht (17) auf dem besagten Körperträger (3) ab einer Überleitungsfolie (14) überleitet.

9. Verfahren gemäß Anspruch 1 bis 7, **dadurch gekennzeichnet, dass**:
- man die besagte thermoplastische Übergangsschicht (17) vor ihrem Übergang vernetzt.

10. Verfahren gemäß Anspruch 1 bis 9, **dadurch gekennzeichnet, dass** man zwecks Erhalt der besagten Beschichtungsschicht (8) in zwei aufeinander folgenden und unabhängigen Schritten vorgeht, einem ersten sogenannten Polymerisationsschritt, in dem ein radialartiger Mechanismus erfolgt, in dem die Monomere zwecks Bildung einer thermoplastischen Übergangsschicht (15) polymerisieren, und einem zweiten sogenannten Postpolymerisationsschritt, in dem man die thermoplastische Übergangsschicht derart vernetzt, dass die besagte wärmeaushärtende Beschichtungsschicht (8) gebildet wird.

11. Verfahren gemäß Anspruch 1 bis 10, **dadurch gekennzeichnet**, das man zur Herstellung der besagten Beschichtungsschicht (8) die Methacrylpolymere durch entweder Expoxydgruppen oder Alkoholfunktionen enthaltende Komponenten vernetzt.

## Claims

1. A method for manufacturing a portable support (1), notably a support to the card format, having a support body (3) provided, on one of its faces (4), with a coating layer (8), **characterised in that**, for manufacturing the said coating layer (8):
- a temporary thermoplastic layer (17) is applied to the said portable support (1);
- the said temporary thermoplastic layer (17) is cross-linked so as to make it thermosetting.

2. A method according to Claim 1, **characterised in that**, for obtaining the said temporary thermoplastic layer (17):
- a first liquid-phase solution (I) is prepared, comprising a mixture of monomers and/or oligomers and a catalyst or polymerisation initiator for the said monomers and/or oligomers;
- the polymerisation of the said monomers and/or oligomers of the said solution (I) is triggered with a view to obtaining a second solution (II).

3. A method according to Claim 2, **characterised in that**:
- there are introduced, into the said second solution (II), monomers and/or oligomers and a catalyst for the addition of the said monomers and/or oligomers on the polymers of the said second solution (II) with a view to obtaining a third solution (III).

4. A method according to Claim 3, **characterised in that**:
- the said third solution (III) is deposited on a layer (19) of a transfer film (14).

5. A method according to Claim 3, **characterised in that**:
- a layer (7) of the said support body (3) is coated with the said third solution (III).

6. A method according to one of Claims 3, 4 or 5, **characterised in that**:
- a solvent phase of the said third solution (III) is evaporated.

7. A method according to one of Claims 1, 2 or 3, **characterised in that**:
- the said temporary thermoplastic layer (17) is printed.

8. A method according to one of Claims 1 to 8, **characterised in that**:
- the said temporary thermoplastic layer (17) is transferred onto the said support body (3) from a transfer film (14).

9. A method according to one of Claims 1 to 7, **characterised in that**:
- the said temporary thermoplastic layer (17) is cross-linked prior to its transfer.

10. A method according to one of Claims 1 to 9, **characterised in that**, for obtaining the said coating layer (8), two consecutive and independent steps are carried out, a first so-called polymerisation step involving a radical mechanism, in which monomers polymerise with a view to forming a temporary thermoplastic layer (15), and a second so-called post-polymerisation step, in which the said temporary thermoplastic layer is cross-linked so as to form the said thermosetting coating layer (8).

11. A method according to one of Claims 1 to 10, **characterised in that**, for manufacturing the said coating layer (8), methacrylic polymers are cross-linked by means of compounds comprising either epoxy groups or alcohol functions.
